# EUROPÄISCHE PATENTSCHRIFT

(11) **EP 2 179 915 B1**
(45) Veröffentlichungstag und Bekanntmachung des Hinweises auf die Patenterteilung: **19.09.2012**
(21) Anmeldenummer: 10001425.7
(22) Anmeldetag: 09.12.1999
(51) Int. Cl.: B62L 1/10, B62L 3/02, F16D 49/16, F16D 55/228

(54) **Bremszylinder für eine hydraulische Felgen- oder Scheibenbremse**
Brake cylinder for a hydraulic rim or disk brake
Cylindre de frein pour un frein sur jante hydraulique ou un frein à disque hydraulique

(30) Priorität: 09.12.1998 DE 19856804; 28.06.1999 DE 19929678
(43) Veröffentlichungstag der Anmeldung: 28.04.2010
(62) Teilanmeldung aus: 99964536.9
(73) Patentinhaber: Gustav Magenwirth GmbH & Co. KG, 72574 Bad Urach (DE)
(72) Erfinder: Krumbeck, Markus, 82438 Eschenlohe (DE); Ruckh, Stefan, 72587 Römerstein/Zainingen (DE); Hujer, Joachim, 72582 Grabenstetten (DE); Rottenkolber, Ludwig, 72574 Bad Urach (DE)
(74) Vertreter: Friese, Martin

(56) Entgegenhaltungen:
- DE-A1- 3 336 123
- DE-A1- 3 744 717
- GB-A- 583 596
- GB-A- 2 315 832
- JP-A- 52 052 077
- US-A- 4 596 313

## Beschreibung

Die Erfindung betrifft einen Bremszylinder für eine hydraulische Bremse gemäß dem Oberbegriff von Anspruch 1 bzw. eine hydraulische Felgenbremse oder Scheibenbremse mit solchen Bremszylindern. Insbesondere betrifft die Erfindung einen Bremszylinder für eine hydraulische Felgenbremse und eine hydraulische Felgenbremse für Fahrräder.

Um die Lage des freien Endes des Kolbens innerhalb des Zylinders relativ zu dem Bremszylinder und somit relativ zu der Felge einzustellen, ist es bei Felgenbremsen bekannt, mittels einer Schraube an dem Geberzylinder hydraulische Flüssigkeit in den Druckraum des Bremszylinders einzuführen. Dabei verschiebt sich der Kolben entgegen der Wirkung einer Federanordnung in Richtung der Felge. Durch Lösen der Schraube am Geberzylinder wird hydraulische Flüssigkeit aus dem Druckraum abgezogen. Infolgedessen bewegt sich der Kolben durch die Kraft der Federeinrichtung wieder von der Felge weg zurück.

Unter freiem Ende des Kolbens ist das Ende des Kolbens zu verstehen, das bei einem an einem Fahrrad montierten Bremszylinder der Felge des Fahrrads gegenüberliegt und bei Betätigung des Bremszylinders die Verlagerung eines Bremsbelags in Richtung der Felge bewirkt.

Bei einer hydraulischen Felgenbremse werden üblicherweise zwei Bremszylinder mit einer Hydraulikleitung derart miteinander verbunden, dass durch die Betätigung des Bremshebels beide Bremszylinder gleichermaßen betätigt werden und die jeweiligen Kolben aus den Zylindern gleichermaßen ausrücken. Dementsprechend bewirkt die Verstellung der Einstellschraube am Geberzylinder die gleichzeitige Verstellung der Ruhelage der Kolben von beiden Bremszylindern. Es besteht aber der Bedarf, die Einstellung der Ruhestellung für eine optimale Anpassung der Bremse an die Felge für jeden Bremszylinder einzeln einzustellen.

Es ist beispielsweise bei Scheibenbremsen bekannt, statt eines geschlossenen Systems ein offenes System zu verwenden. Ein offenes System bedeutet ein System mit einem Ausgleichsbehälter, der in Ruhestellung des Bremshebels mit dem Druckraum des Bremssattels in Verbindung steht. Wird durch Verstellung des Kolbens in dem Bremssattel das Volumen des Druckraums verändert, kann ein entsprechender Ausgleich mit Hydraulikflüssigkeit durch den Ausgleichsbehälter erfolgen. Bei Betätigung der Bremse wird die Verbindung des Druckraums mit dem Ausgleichsbehälter unterbunden. Ein offenes System hat jedoch den Nachteil, dass es durch die Notwendigkeit eines Ausgleichsbehälters relativ aufwendig und damit bei der Herstellung teuer ist. Daher werden bei hydraulischen Felgenbremsen üblicherweise geschlossene Systeme ohne Ausgleichsbehälter eingesetzt.

Ein Bremszylinder gemäß dem Oberbegriff von Anspruch 1 ist aus der US 4 596 313 A bekannt.

Die in der US 4 596 313 A offenbarte Bremse weist eine Zentriervorrichtung und eine Einstellvorrichtung auf, mittels der die Lage des Schwimmsattels und der Abstand beider Bremsbeläge von der Bremsscheibe eingestellt werden kann. Die bekannte Bremse hat den Nachteil, dass die Ruhestellung der einzelnen Kolben nicht unabhängig voneinander einstellbar ist.

Der Erfindung liegt daher die Aufgabe zu Grunde, einen Bremszylinder gemäß dem Oberbegriff von Anspruch 1 anzugeben, bei dem die Ruhestellung des Kolbens auf einfache Weise und unabhängig von dem anderen Bremszylinder einer Bremse verstellbar ist.

Die Aufgabe der Erfindung wird mit einem Bremszylinder gemäß Anspruch 1 gelöst.

Vorteilhafte Ausgestaltungen der Erfindung sind in den abhängigen Ansprüchen angegeben.

Um die relative Lage des freien Endes des Kolbens bezüglich des Zylinders unabhängig von dem anderen Bremszylinder einstellen zu können, weist der erfindungsgemäße Bremszylinder vorzugsweise eine Verstellvorrichtung auf, mit der die relative Lage des freien Endes des Kolbens in axialer Richtung in dem Zylinder derart verstellbar ist, dass das Volumen des Druckraums unverändert bleibt. Das hat den Vorteil, dass bei der Verstellung des freien Endes des Kolbens in axialer Richtung bezüglich des Zylinders kein Austausch von hydraulischer Flüssigkeit mit dem System erfolgt. Daher kann die Verstellung des freien Endes des Kolbens bei einem einzelnen Bremszylinder unabhängig von einem Ausgleichsbehälter erfolgen.

Beispielsweise kann die Verstellung der relativen Lage des freien Endes des Kolbens bezüglich des Zylinders mittels eines Verstellkolbens erfolgen, der den Kolben (und somit auch das freie Ende des Kolbens) mitsamt Druckraum in dem Zylinder in axialer Richtung verschiebt. Dadurch wird die relative Lage des freien Endes des Kolbens bezüglich des Zylinders geändert, wobei gleichzeitig das Volumen des Druckraums unverändert bleibt.

Vorteilhafterweise ist der Verstellkolben in einen Bereich des Zylinders eingeschraubt. Das hat den Vorteil, dass die Verstellung des freien Endes des Kolbens genau und zuverlässig erfolgen kann.

Vorteilhafterweise ist der Abstand zwischen dem Zufluss in den Druckraum und dem Verstellkolben in einer von dem Zufluss am weitesten entfernt liegenden Stellung größer als der maximal mögliche Verstellweg des Verstellkolbens. Dadurch wird jederzeit der mögliche Austausch hydraulischer Flüssigkeit zwischen dem Zufluss und dem Druckraum gewährleistet.

Vorteilhafterweise weist der Verstellkolben einen Sicherungsring auf, der den maximal möglichen Verstellweg des Verstellkolbens begrenzt.

Beispielsweise kann die Verstellung der relativen Lage des freien Endes des Kolbens bezüglich des Zylinders dadurch erfolgen, dass gemäß einem weiteren Ausführungsbeispiel der Erfindung der Kolben in der Länge verstellbar ausgebildet ist. Das hat den Vorteil, dass Lage und Größe des Druckraums beim Verstellen des Abstands zwischen freiem Ende des Kolbens und Felge nicht geändert werden müssen, weil der relative Abstand zwischen freiem Ende des Kolbens und Felge bzw. Bremsbelag und Felge allein durch Verstellung der Länge des Kolbens eingestellt werden kann.

Durch die Weiterbildung der vorliegenden Erfindung mit einer der beschriebenen Verstellvorrichtungen der relativen Lage des freien Endes des Kolbens bezüglich des Zylinders ergibt sich der weitere Vorteil, dass die Bremsbelagjustage besonders einfach und unabhängig von der Justage des Bremszylinders erfolgen kann. Insbesondere kann der Abstand des freien Endes des Kolbens bzw. des Bremsbelags von der Felge des Fahrrads durch die erfindungsgemäße Ausbildung der schwenkbaren Befestigung grob vorgegeben und durch die individuelle Verstellung der relativen Lage des freien Endes des Kolbens bezüglich des Zylinders des Bremszylinders fein eingestellt werden. Durch diese Weiterbildung ergibt sich insgesamt ein einfacher Aufbau des Bremszylinders mit wenigen Teilen. Insbesondere lässt sich die Montage des Bremszylinders am Fahrrad genau, einfach und schnell bewerkstelligen.

Durch die Weiterbildung der vorliegenden Erfindung mit einer der beschriebenen Verstellvorrichtungen der relativen Lage des freien Endes des Kolbens bezüglich des Zylinders ergibt sich außerdem der Vorteil, dass sich die Lage des Bremsbelags axial separat einstellen und bei Belagabnutzung nachstellen lässt.

Gemäß einer Ausführungsform der vorliegenden Erfindung ist das Anordnungsglied an dem Hinterbau des Rahmens bzw. der Gabel in Bezug auf die Felge derart angeordnet, dass sich beim Einbau des Bremszylinders an dem Anordnungsglied und beim Schwenken des Bremszylinders in die Bremsstelle automatisch die richtige Position zwischen dem Bremsbelag und der Felge einstellt.

Im Folgenden wird die Erfindung beispielhaft anhand der in den Figuren gezeigten Ausführungsbeispiele beschrieben:
- Fig. 1: zeigt eine Felgenbremse gemäß der vorliegenden Erfindung mit erfindungsgemäßen Bremszylindern in einer Bremsstellung.
- Fig.2: zeigt eine Felgenbremse gemäß der vorliegenden Erfindung mit erfindungsgemäßen Bremszylindern in einer Montagestellung.
- Fig. 3: zeigt eine Felgenbremse gemäß der vorliegenden Erfindung mit erfindungsgemäßen Bremszylindern, die teilweise im Querschnitt dargestellt sind.
- Fig. 4: zeigt einen Bremszylinder von Fig. 3 in einem größeren Maßstab.
- Fig. 5: zeigt eine perspektivische Ansicht des Bremszylinders von Fig. 3.
- Fig. 6: zeigt eine im Bereich der Befestigungsvorrichtung freigeschnittene Ansicht des Bremszylinders von Fig. 3 von oben.
- Fig. 7: zeigt einen Querschnitt eines Bremszylinders gemäß einem weiteren Ausführungsbeispiel der vorliegenden Erfindung.

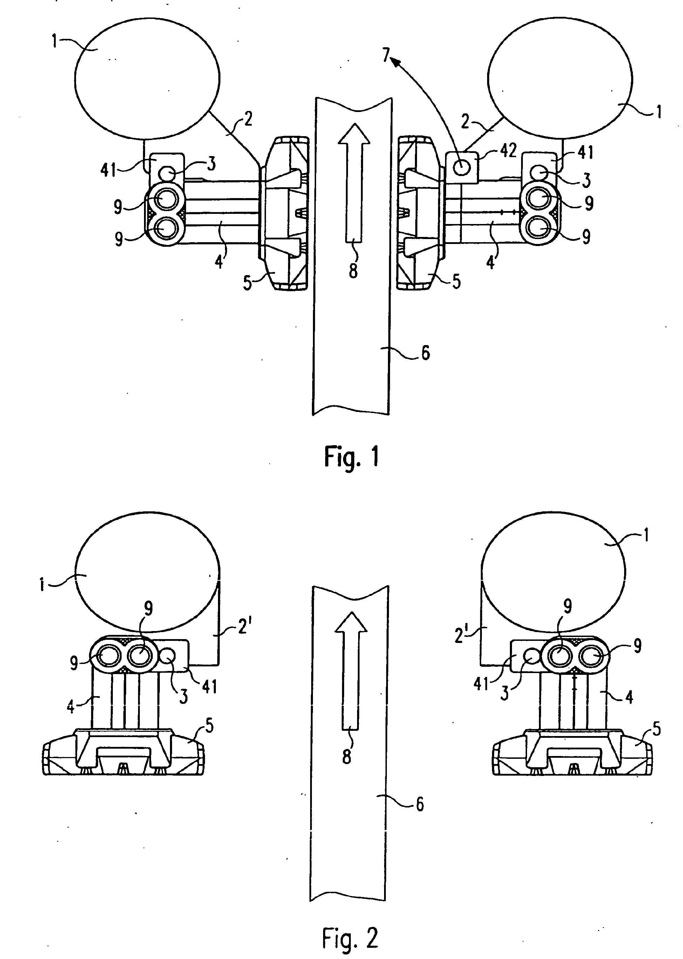

Fig. 1 zeigt eine Felgenbremse gemäß der vorliegenden Erfindung mit erfindungsgemäßen Bremszylindern in einer Bremsstellung. Bremsstellung bedeutet eine Stellung, in der die Bremsen betätigt werden können. Die in Fig. 1 gezeigte Felgenbremse ist für die Montage sowohl an der Vorderradgabel als auch an dem Hinterbau des Rahmens geeignet.

An zwei Rahmenteilen 1 eines nicht dargestellten Fahrrads sind zwei Bremszylinder 4 angeordnet. Die Rahmenteile sind entweder die Gabelbeine der Vorderradgabel oder die Streben des Rahmenhinterbaus. Zwischen den Rahmenteilen 1 ist ein Laufrad, d.h. das Vorderrad oder Hinterrad angeordnet. Übersichtshalber ist schematisch nur ein Teil der Radfelge 6 dargestellt, auf die üblicherweise ein nicht dargestellter Reifen aufgezogen ist.

An einem nicht dargestellten Lenker ist eine nicht dargestellte Geberarmatur angebracht, die in bekannter Weise über Hydraulikleitungen 9 mit den Bremszylindern 4 verbunden ist. Bei Betätigung des Handhebels der Geberarmatur wird ein hydraulischer Druck in den Hydraulikleitungen aufgebaut, der die Bremszylinder betätigt, die ihrerseits die daran in einer Aufnahmeeinrichtung 10 angeordneten Bremsbeläge 5 gegen die Felge 6 drücken.

An den Rahmenteilen 1 ist jeweils ein Anordnungsglied 2 angebracht. Bei dem dargestellten Ausführungsbeispiel ist das Anordnungsglied 2 als Lasche ausgebildet. Vorzugsweise sind die Anordnungsglieder 2 jeweils einstückig mit dem zugehörigen Rahmenteil 1 ausgebildet. Vorzugsweise sind die Anordnungsglieder derart ausgebildet, dass der Bremszylinder durch seine Befestigung bzw. Anordnung an dem Anordnungsglied hinreichend genau für den Bremsbetrieb eingestellt ist.

An den Anordnungsgliedern ist jeweils ein Bremszylinder 4 schwenkbar angeordnet. Die Bremszylinder 4 weisen an ihrem jeweils der Felge abgewandten Enden ein Verbindungsglied 41 auf. Die Verbindungsglieder 41 sind bei dem dargestellten Ausführungsbeispiel Ansätze mit Öffnungen, in denen Bolzen 3 aufgenommen sind, die jeweils an einem Anordnungsglied 2 angreifen. Die die Bolzen 3 aufnehmenden Ansätze der Bremszylinder 4 sind vorzugsweise jeweils einstückig mit dem zugehörigen Bremszylinder 4 ausgebildet.

Die Bremszylinder 4 sind über die Bolzen 3 an den Rahmenteilen 1 derart angelenkt, dass die Bremszylinder 4 jeweils um die Achse der Bolzen 3 schwenkbar sind. Diese Schwenkachse liegt im Wesentlichen senkrecht zu der Laufrichtung der Felge an der Stelle, an der die Bremsbeläge beim Bremsen an der Felge angreifen. Anders ausgedrückt liegt die Schwenkachse im Wesentlichen senkrecht zu den Bremsbelägen oder der Aufnahmevorrichtung. Die definierte Führung der Schwenkeinrichtung ermöglicht die reproduzierbare Positionierung der Bremszylinder auch bei mehrmaligen Schwenkbewegungen, die beispielsweise beim Radein- bzw. - ausbau erforderlich sind.

Der mögliche Schwenkbereich des Bremszylinders 4 ist durch das Anordnungsglied 2 begrenzt. Bei der Betätigung der Bremse wird von der Felge 6 auf die Bremsbeläge 5 und von den Bremsbelägen 5 auf die Bremszylinder 4 Kräfte übertragen, deren Richtung der Laufrichtung 8 des Laufrads an der Stelle entspricht, an der die Bremsbeläge 5 an der Felge 6 angreifen. Diese Kräfte üben bezogen auf die durch den Bolzen 3 definierte Schwenkachsen auf die Bremszylinder 4 jeweils ein Drehmoment aus, das den jeweiligen Bremszylinder 4 in Richtung des zugehörigen Anordnungsglieds 2 dreht, d.h. den in Fig. 1 links dargestellten Bremszylinder entgegen dem Uhrzeigersinn und den in Fig. 1 rechts dargestellten Bremszylinder im Uhrzeigersinn. Die Bremszylinder 4 werden von den Anordnungsgliedern 2 formschlüssig aufgenommen. Daher wird die Kraft von den Bremszylindern 4 auf die Anordnungsglieder und von den Anordnungsgliedern auf die Rahmenteile übertragen.

Die Bremszylinder sind an den Anordnungsgliedern derart um eine Schwenkachse schwenkbar angeordnet, dass die beim Bremsen von dem Bremsbelag auf den Bremszylinder wirkende Kraft von der Mitte des Kontaktbereichs zwischen Bremsbelag und Felge ungefähr und vorzugsweise genau auf das Rohrzentrum des Rahmenteils zeigt, an dem der Bremszylinder angeordnet ist. Das hat den Vorteil, dass nur ein geringes bzw. kein Drehmoment auf das Rahmenteil ausgeübt wird, welches eine Verdrehung des Rahmenteils bewirken würde. Die beim Bremsen von dem Bremsbelag auf den Bremszylinder wirkende Kraft ist die Summe der von der Felge über den Bremsbelag auf den Bremszylinder ausgeübten Kraft, die parallel zur Bewegungsrichtung 8 der Felge gerichtet ist, zuzüglich der von der Felge auf den Bremsbelag beim Bremsen wirkenden Gegenkraft, die senkrecht zur Bewegungsrichtung 8 der Felge von der Felge weg gerichtet ist. Die Schwenkachse ist derart angeordnet, dass die beim Bremsen von dem Bremsbelag auf den Bremszylinder wirkende Kraft auf den Bremszylinder ein Drehmoment ausübt, derart, dass der Bremszylinder in die Bremsstellung gedreht wird, in der er an dem Anordnungsglied formschlüssig anliegt.

Das als Lasche ausgebildete Anordnungsglied 2 bildet einen Drehpunkt. Der Drehpunkt kann als mit dem Anordnungsglied einstückig ausgebildeter Stift vorgesehen oder als Bolzen 3 ausbildet sein. Der Drehpunkt dient als Aufnahme für den Bremszylinder 4. Die Reaktionskraft wird in Axial- und Tangentialrichtung von dem Anordnungsglied formschlüssig aufgenommen.

Bei dem in Fig. 1 rechts dargestellten Bremszylinder 4 ist weiterhin ein Arretierungsglied 42 vorgesehen. Das Arretierungsglied ist vorzugsweise einstückig mit dem Bremszylinder 4 ausgebildet. In einer Öffnung des Arretierungsglieds 42 ist ein Bolzen 7 als lösbares Sicherungselement aufgenommen. Der Bolzen kann beispielsweise durch eine Feder in eine Schließstellung vorgespannt sein. Der Bolzen 7 bildet in der Schließstellung eine formschlüssige Verbindung des Bremszylinders 4 mit dem Anordnungsglied 2. Dadurch wird der Bremszylinder mit zwei Achsen gegenüber dem Anordnungsglied festgelegt und eine Drehung um die durch den Bolzen 3 definierte Schwenkachse unterbunden. Insbesondere bei Rückfährtsfahrt wird durch das lösbare Sicherungselement eine Drehung des Bremszylinders um die durch den Bolzen 3 definierte Schwenkachse unterbunden.

Zur Demontage des Laufrads ist der Bolzen 7 lösbar angeordnet, so dass der Bremszylinder 4 in die in Fig. 2 bei dem anderen Ausführungsbeispiel der Erfindung gezeigten Ausführungsbeispiel geschwenkt werden kann.

Bei einem nicht dargestellten Ausführungsbeispiel der Erfindung bewirkt ein Vorspannglied, dass der Bremszylinder 4 in der Bremsstellung gegen das Anordnungsglied 2 vorgespannt ist. Dadurch wird erreicht, dass sich der Bremszylinder selbsttätig z.B. aus der Montagestellung in die Bremsstellung zurückdreht. Außerdem wird bei Vorwärtsfahrt gewährleistet, dass die Bremszylinder immer in der Bremsstellung angeordnet sind.

Fig. 2 zeigt eine Felgenbremse gemäß der vorliegenden Erfindung mit erfindungsgemäßen Bremszylindern in einer Montagestellung. Montagestellung bedeutet eine Stellung, in der das Rad montiert und demontiert werden kann.

Die in Fig. 2 gezeigte Felgenbremse ist für die Montage sowohl an dem Hinterbau des Rahmens als auch an der das Vorderrad aufnehmenden Gabel geeignet.

Das Ausführungsbeispiel der Fig. 2 unterscheidet sich von dem Ausführungsbeispiel von Fig. 1 im Wesentlichen durch die Ausbildung des Anordnungsglieds 2 bzw. 2'. Die übrigen gleichen Teile haben die gleichen Bezugszeichen wie das Ausführungsbeispiel von Fig. 1.

In der Montagestellung sind die beiden Bremszylinder 4 um 90° aus der Bremsstellung geschwenkt dargestellt. Infolgedessen behindern die Bremsbeläge 5 die Montage und Demontage des Laufrads nicht.

Zum Anbau eines Bremszylinders 4 an ein Rahmenteil 1 wird einfach der Bremszylinder 4 an seinem Verbindungsteil 41 über den Bolzen 3 mit dem Anordnungsglied 2 des Rahmenteils 1 schwenkbar verbunden. Bei der Ausführung mit dem lösbaren Sicherungselement wird anschließend der Bolzen 7 in das Arretierungsglied 42 eingesetzt und mit dem Anordnungsglied verbunden.

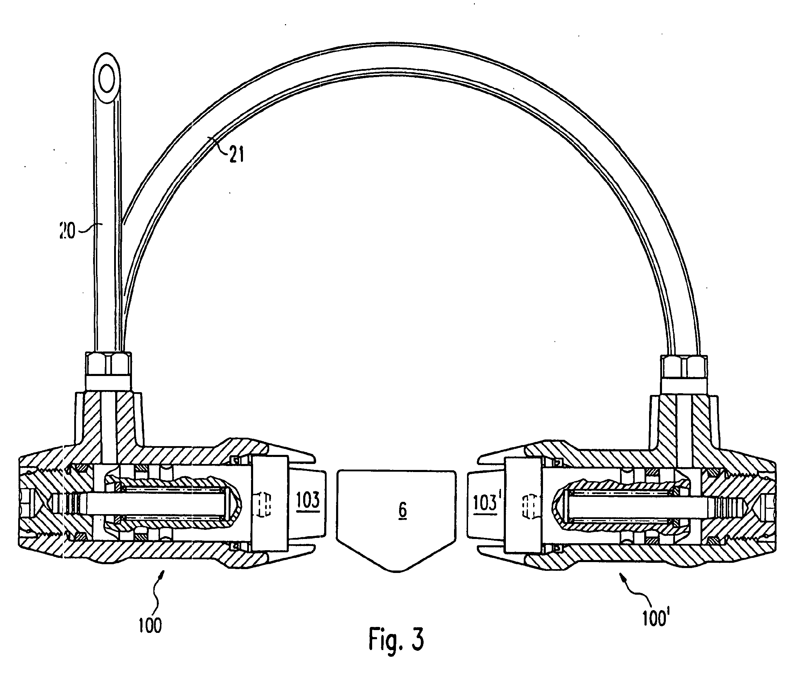

Die Figuren 3 bis 6 zeigen das bevorzugte Ausführungsbeispiel der Erfindung.

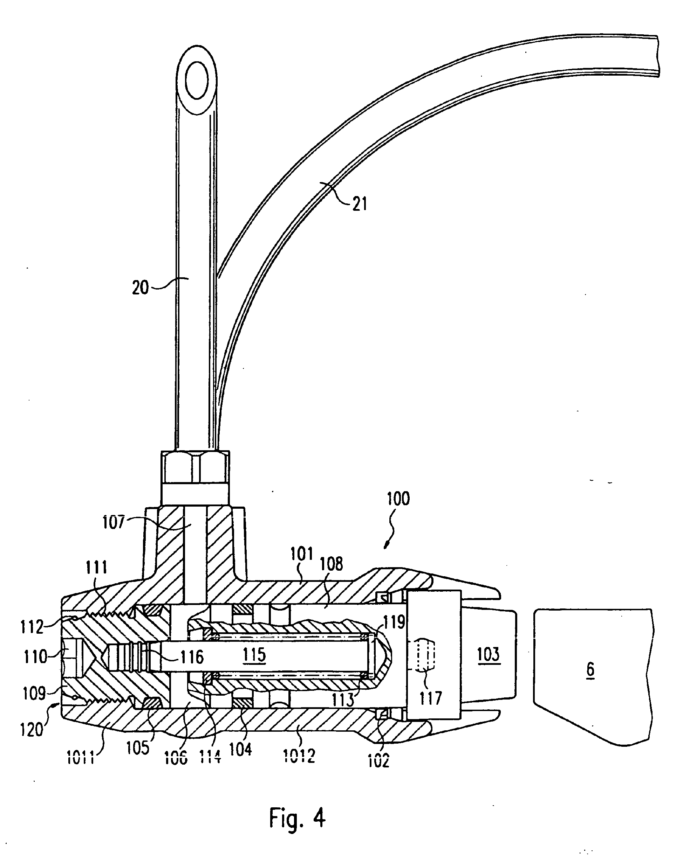

Fig. 3 zeigt eine Felgenbremse gemäß der vorliegenden Erfindung mit erfindungsgemäßen Bremszylindern 100, 100', die beidseitig einer Felge 6 angeordnet sind. Die zueinander symmetrischen Bremszylinder 100, 100' werden anhand des links dargestellten Bremszylinders 100 in Zusammenhang mit Fig. 4 näher beschrieben. Zur Betätigung der Bremse wird über einen Schlauch 20 Hydraulikflüssigkeit in den linken Bremszylinder 100 zugeführt. Gleichzeitig wird über einen nicht dargestellten zweiten Anschluss zum Druckraum 106 und einen Verbindungsschlauch 21 dem rechten Bremszylinder 100' Hydraulikflüssigkeit zugeführt. Die Zufuhr der Hydraulikflüssigkeit geschieht auf bekannte Weise über einen Bremshebel, der einen Geberzylinder betätigt, der Hydraulikflüssigkeit in den Schlauch 20 drückt.

Fig. 4 zeigt den linken Bremszylinder 100 von Fig. 3 in einem größeren Maßstab. Der Bremszylinder 100 weist einen Zylinder 101 mit einer durchgehenden Bohrung auf, deren Durchmesser in einem ersten Abschnitt 1011 kleiner als in einem zweiten Abschnitt 1012 ist. Der erste Abschnitt 1011 weist ein Innengewinde auf. In der Innenbohrung des Zylinders 101 sind von links nach rechts ein Verstellkolben 109, ein Druckraum 106 und ein Kolben 108 angeordnet.

Der Verstellkolben 109 weist auf der linken Seite einen Abschnitt kleineren Durchmessers auf, der mit einem Außengewinde 111 versehen ist, und einen zweiten in Fig. 4 rechts von dem ersten Abschnitt angeordneten Abschnitt größeren Durchmessers auf, in dem eine Nut für eine Dichtung 105 vorgesehen ist die den Druckraum 106 abdichtet. Der Verstellkolben 109 ist mit dem Außengewinde 111 in das Innengewinde des Zylinders 101 eingeschraubt. Zur Verdrehung des Verstellkolbens 109 ist ein Innensechskant 110 in der Stirnfläche des Verstellkolbens 109 vorgesehen. Der Sicherungsring 112 begrenzt den möglichen Verstellweg des Verstellkolbens 109 in der Innenbohrung dadurch, dass er bei der maximal möglichen Verstellung an dem Innengewinde in dem Abschnitt 1011 des Zylinders 101 anstößt. Rechts neben dem Verstellkolben ist der Druckraum 106 angeordnet, der im Betrieb mit Hydraulikflüssigkeit gefüllt ist. Der Druckraum 106 ist über einen Zufluss 107 mit dem Schlauch 20 verbunden. Rechts neben dem Druckraum 106 ist der Kolben 108 angeordnet. Der Kolben 108 weist eine umlaufende Nut für eine Dichtung 104 zur Abdichtung des Druckraums 106 auf. Der Kolben 108 weist des Weiteren eine Innenbohrung auf, in der der Bolzen 115 und die Feder 113 aufgenommen sind. Die Feder 113 stützt sich auf der linken Seite an einer Scheibe 114 ab, die in einem ersten Abschnitt der Bohrung, die einen größeren Durchmesser aufweist, in den Kolben 108 eingesetzt und verstemmt ist. Die Befestigung der Scheibe 114 kann alternativ oder zusätzlich auch durch andere übliche Sicherungsbauteile erfolgen, wie beispielsweise einen Seegerring. Auf der rechten Seite stützt sich die Feder 113 an einem Kopf 119 des Bolzens 115 ab. Der Bolzen 115 ist in dem Verstellkolben 109 mit einer Presspassung 116 befestigt. Alternativ oder zusätzlich könnte der Bolzen 115 in dem Verstellkolben 109 auch durch eine Klebe-, Löt- bzw. Gewindeverbindung befestigt sein.

Der Kolben weist einen Befestigungskopf 117 auf, an dem der Bremsbelag 103 befestigt ist. Um den Eintritt von Schmutz in den Zylinder 101 zu verhindern, ist ein Abstreifer 102 im Bereich der Öffnung des Zylinders 101 vorgesehen.

Bei Betätigung des nicht dargestellten Bremshebels wird ein Kolben in einem nicht dargestellten Geberzylinder betätigt, der Hydraulikflüssigkeit in den Schlauch 20 presst. Dadurch wird über den Zufluss 107 Hydraulikflüssigkeit in den Druckraum 106 eingebracht. In Folge dieser Druckerhöhung verschiebt sich der Kolben 108 in dem Zylinder 101 entgegen der Wirkung der Feder 113 nach rechts, so dass der Belag 103 an der Felge 6 anliegt und eine Bremswirkung erfolgen kann. Über den Verbindungsschlauch 21 wird entsprechend Hydraulikflüssigkeit dem Bremszylinder 100' zugeführt und der Kolben dieses Bremszylinders entsprechend betätigt. Lässt der Druck der Hydraulikflüssigkeit durch Loslassen des Bremshebels nach, wird der Kolben 108 durch die Feder 113 zurück in die Ausgangsstellung geschoben und die Hydraulikflüssigkeit zurück in den Schlauch 20 gedrückt.

Für eine optimale Bremswirkung ist es erforderlich, den Abstand zwischen dem Bremsbelag 103 und der Felge 6 einzustellen. Beispielsweise bei Abnutzung des Bremsbelags 103 ist es erforderlich, die Grundstellung des Kolbens 108 nach rechts zu verschieben. Das kann bei dem erfindungsgemäßen Bremszylinder einfach dadurch geschehen, dass der Verstellkolben 109 über das Gewinde 111 in der Innenbohrung des Zylinders 101 verdreht und damit in axialer Richtung bewegt wird. Der Verstellkolben 109 verschiebt den Kolben 108 insbesondere mittels des Bolzens 115 nach rechts. Die Spannung der Feder 113 verändert sich dabei nicht. Im Grunde werden alle Teile in der Innenbohrung in dem Zylinder 101 relativ zu dem Zylinder 101 in axialer Richtung verschoben.

Um eine sichere Funktion der Bremse jederzeit zu gewährleisten, ist es wichtig, dass die Verstellung nicht so weit erfolgt, dass der Verstellkolben 109 den Zufluss 107 in den Druckraum 106 verschließt. Daher ist der Sicherungsring 112 derart angeordnet, dass er die Verstellmöglichkeit des Verstellkolbens 109 derart begrenzt, dass er immer links von dem Zufluss 107 angeordnet ist.

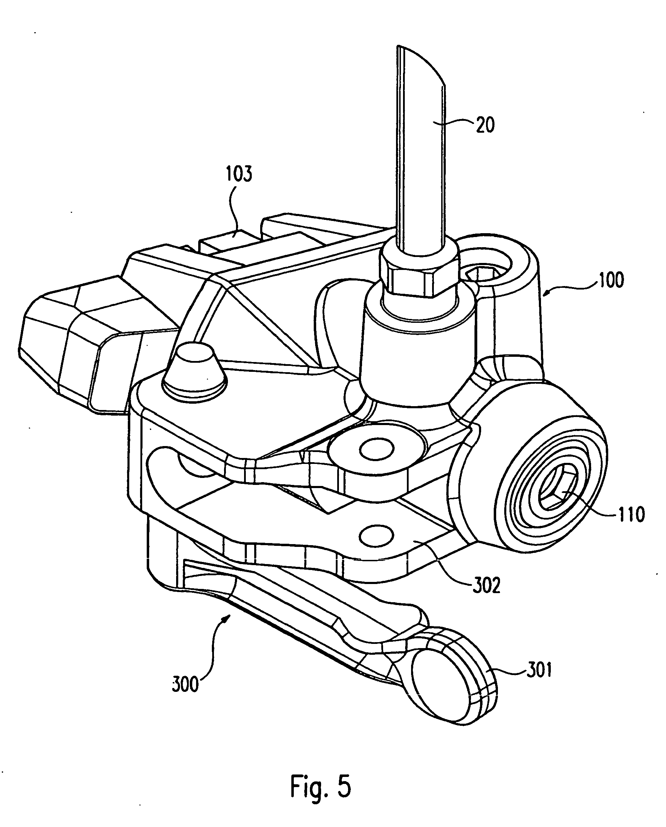

Fig. 5 zeigt eine perspektivische Ansicht des Bremszylinders 100 der Figuren 3 und 4. Die perspektivische Ansicht zeigt die bevorzugte erfindungsgemäße Befestigungsvorrichtung 300 für den Bremszylinder. Der Bremszylinder ist an einem Rahmenteil mit den Ansätzen 302 durch einen in Fig. 5 nicht dargestellten Bolzen schwenkbar befestigbar. Um die Schwenkbewegung schnell durchführen zu können, ist ein Schnellspannhebel 301 vorgesehen.

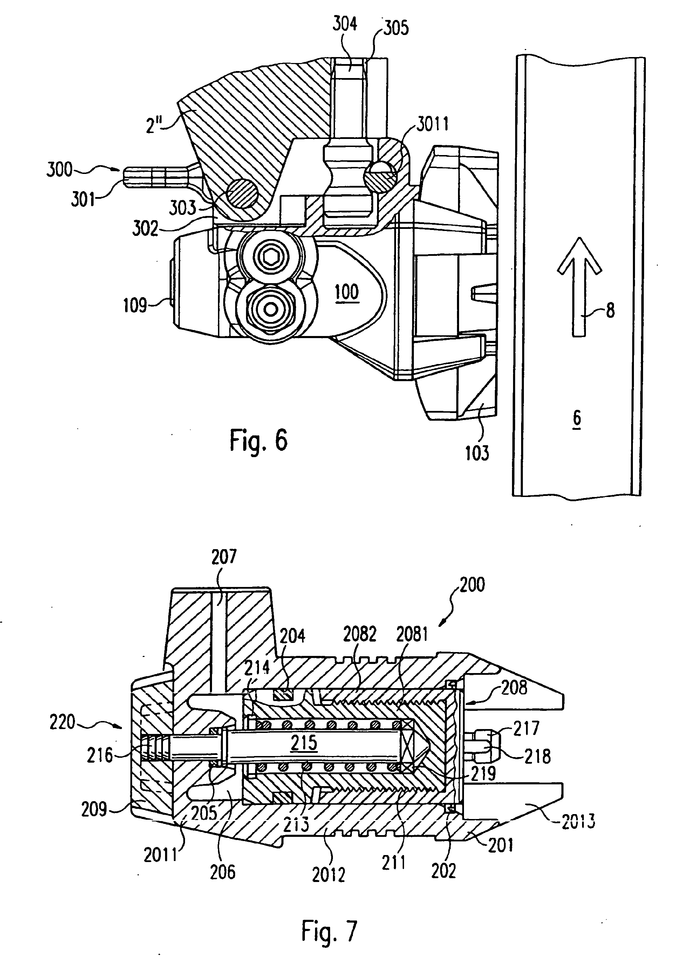

Fig. 6 zeigt eine im Bereich der Befestigungsanordnung 300 frei geschnittene Ansicht des Bremszylinders 100 der Figuren 3 bis 5 von oben. Anhang dieser Darstellung lässt sich die bevorzugte erfindungsgemäße Befestigungsvorrichtung 300 am besten beschreiben.

In Fig. 6 ist die Befestigungsvorrichtung lediglich für den in Fig. 3 links dargestellten Bremszylinder 100, d.h. den in Fahrtrichtung der Fahrrads linken Bremszylinder dargestellt. Die Befestigungsvorrichtung 300 für den anderen Bremszylinder ist entsprechend, d.h. spiegelverkehrt, aufgebaut.

Das Anordnungsglied 2" ist an dem Hinterbau des Fahrradrahmens bzw. an der Gabel des Fahrrads angeordnet. Der Bremszylinder 100 ist an dem Anordnungsglied 2" über den Bolzen 303 schwenkbar angeordnet. Der Bolzen 303 greift sowohl in eine Öffnung des Anordnungsglieds 2" als auch in eine Öffnung des Verbindungsglieds 302 ein. Zur Arretierung der Schwenkbewegung um die durch den Bolzen 303 bestimmte Achse ist ein exzentrischer Spannbolzen 3011 vorgesehen, der mit einem Schnellspannhebel 301 verbunden ist. Der exzentrische Schnellspannhebel 3011 wirkt mit einer Schraube 304 zusammen, die in eine in dem Anordnungsglied 2" ausgebildeten Gewindebohrung 305 eingeschraubt ist. Die durch das Zusammenwirken des exzentrischen Spannbolzens mit dem mit einer Aussparung versehenen Kopf der Schraube 305 bewirkte Vorspannung kann durch die Schraube 304 voreingestellt werden.

Fig. 6 zeigt den Bremszylinder 100 in einer Stellung, in der die Schwenkbewegung arretiert ist. Durch Umlegen des Spannhebels 301 in eine Stellung parallel zu der Felge 6 gibt der exzentrische Spannbolzen 3011 den Kopf der Schraube 304 derart frei, dass der Bremszylinder 100 um die durch die Bolzen 303 bestimmte Achse in die Montagestellung geschwenkt werden kann.

Die in Fig. 6 dargestellte Befestigungsvorrichtung 300 stellt eine besonders einfache und zuverlässige Befestigung des Bremszylinders 100 an dem Anordnungsglied 2" und Arretierung der Schwenkbewegung um die durch den Bolzen 303 bestimmte Achse dar. Insbesondere wird eine lösbare Arretierung zwischen dem Bremszylinder 100 dem Anordnungsglied 2" zu Verfügung gestellt.

Bei einem weiteren nicht dargestellten Ausführungsbeispiel ist der Bremszylinder nicht, wie in Fig. 6 dargestellt, in Laufrichtung 8 der Felge 6 gesehen vor dem Rahmenteil und dem Anordnungsglied 2", sondern in Laufrichtung der Felge gesehen hinter dem Anordnungsglied und dem Rahmenteil angeordnet. Dieses Ausführungsbeispiel ist insbesondere für Anwendungsfälle geeignet, bei denen der Platz im Kniebereich zwischen Rahmen und Gabel begrenzt ist. Das Ausführungsbeispiel entspricht dem in Fig. 6 gezeigten, wobei die Laufrichtung 8 jedoch in die andere Richtung zeigt. Auch dieses Ausführungsbeispiel stellt eine integrierte Lösung und eine definierte Schwenkbewegung des Bremszylinders in die Bremsstellung zur Verfügung. Bei diesem Ausführungsbeispiel muss in Folge der geänderten Kräfteverteilung beim Bremsen der exzentrische Spannbolzen geeignet dimensioniert werden, um die beim Bremsen auftretenden Kräfte aufnehmen zu können.

Fig. 7 zeigt einen Schnitt durch ein weiteres Ausführungsbeispiel eines erfindungsgemäßen Bremszylinders. Der Bremszylinder weist einen Zylinder 201 mit einer Bohrung auf, in der ein Kolben 208 verschiebbar angeordnet ist. Links neben dem Kolben 208 ist ein Druckraum 206 vorgesehen, der über einen Zufluss 207 mit einem nicht dargestellten Schlauch 20 verbunden ist, der mit dem nicht dargestellten Geberzylinder verbunden ist. Der Kolben 208 weist ein Kolbeninnenteil 2081 und ein Kolbenaußenteil 2082 auf. Das Kolbenaußenteil 2082 weist eine Bohrung mit einem Innengewinde auf. Das Kolbeninnenteil 2081 weist ein Außengewinde auf, das in das Innengewinde des Kolbenaußenteils 2082 eingreift. Durch Verdrehung des Kolbeninnenteils 2081 gegenüber dem Kolbenaußenteil 2082 ist es somit möglich, die Länge des Kolbens 208 zu verändern. Das Kolbeninnenteil 2081 weist eine nicht kreisförmige Innenbohrung auf, in der ein Bolzen 215 mit einem Kopf drehfest angeordnet ist. Der Kopf weist einen dem Querschnitt der Bohrung entsprechenden Querschnitt auf. Bei dem dargestellten Ausführungsbeispiel ist der Querschnitt des Kolbeninnenteils sechseckig und der Kopf des Bolzens ein herkömmlicher Sechskant. An dem Kopf des Bolzens 215 ist die Feder 213 abgestützt. Auf der dem Druckraum 206 benachbarten Seite des Kolbeninnenteils 2081 weist das Kolbeninnenteil 2081 eine kurze größere Bohrung auf, in die eine Scheibe 214 eingesetzt und verstemmt ist. Die Befestigung der Scheibe 114 kann alternativ oder zusätzlich auch durch andere übliche Sicherungsbauteile erfolgen, wie beispielsweise einen Seegerring. An der Scheibe 214 stützt sich die Feder 213 ab. Der Bolzen geht durch eine Öffnung in der den Druckraum 206 abschließenden rechten Wand des Bremszylinders 200 hindurch. Die Dichtung 205 dichtet den Druckraum 206 gegenüber der Umgebung ab. Das Kolbeninnenteil 2081 weist eine Nut auf, in der die Dichtung 204 zur Abdichtung des Druckraums 206 angeordnet ist. Um eine Verschmutzung des Inneren des Zylinders 201 zu vermeiden, ist ein Abstreifer 202 an der Öffnung des Zylinders 201 vorgesehen.

Ein Verstellrad 209 ist an dem Bolzen 215 mit einer Presspassung 216 drehfest befestigt und somit drehfest mit dem Kolbeninnenteil 2081 verbunden. Alternativ oder zusätzlich könnte der Bolzen 215 mit dem Verstellrad 209 auch über eine Klebe-, Löt- bzw. Gewindeverbindung verbunden sein. Das Kolbenaußenteil 2082 weist einen Befestigungskopf 217 zur Befestigung des nicht dargestellten Bremsbelags auf. Der Bremsbelag greift mit seinen äußeren Enden in Fortsätze 2013 des Bremszylinders ein. Dadurch ist der Bremsbelag drehfest gegenüber dem Bremszylinder 200 angeordnet. Der Befestigungskopf 217 weist eine Fläche 218 auf, die das Kolbenaußenteil 2082 gegen Verdrehung gegenüber dem Bremsbelag und damit gegenüber dem Zylinder 201 sichert. Durch Verdrehen des Verstellrads 209 kann somit das drehfest mit dem Verstellrad verbundene Kolbeninnenteil 2081 gegenüber dem mit dem Bremszylinder 200 im Wesentlichen drehfest angeordneten Kolbenaußenteil 2082 verdreht werden. Dadurch verändern sich die Länge des Kolbens 208 und der Abstand des Bremsbelags von der Felge. Da sich die Lage des Kolbens 208 relativ zu dem Druckraum 206 nicht ändert, bleibt das Volumen des Druckraums 206 unverändert.

Die Erfindung betrifft somit auch einen Bremszylinder für eine hydraulische Felgenbremse mit einem Druckraum und einem Zylinder, in dem ein Kolben verschiebbar angeordnet ist, wobei der Druckraum gemeinsam mit dem Kolben verschiebbar ist.

Die Erfindung betrifft somit auch einen Bremszylinder für eine hydraulische Felgenbremse oder Scheibenbremse mit einem Zylinder, in dem ein Kolben verschiebbar angeordnet ist, wobei die Länge des Kolbens verstellbar ist.

Die Erfindung betrifft somit auch einen Bremszylinder für eine hydraulische Bremse mit einem Zylinder, in dem ein Kolben in axialer Richtung des Zylinders verschiebbar angeordnet ist, einem Druckraum, wobei der Kolben in dem Zylinder durch Veränderung des Volumens des Druckraums verschiebbar ist, und einer Verstellvorrichtung, mit der die relative Lage des freien Endes des Kolbens in axialer Richtung bezüglich des Zylinders derart verstellbar ist, dass das Volumen des Druckraums im wesentlichen unverändert bleibt.

Die Erfindung betrifft somit auch einen voranstehend beschriebenen Bremszylinder, bei dem durch Betätigung der Verstelleinrichtung der Kolben gemeinsam mit dem Druckraum in dem Zylinder in axialer Richtung verschiebbar ist.

Die Erfindung betrifft somit auch einen voranstehend beschriebenen Bremszylinder, bei dem die Verstellvorrichtung einen Verstellkolben aufweist, der in dem Zylinder derart verschiebbar angeordnet ist, dass sich der Druckraum zwischen dem Kolben und dem Verstellkolben befindet.

Die Erfindung betrifft somit auch einen voranstehend beschriebenen Bremszylinder, bei dem der Zylinder einen Abschnitt mit einem Innengewinde aufweist, in den der Verstellkolben mit einem Außengewinde eingeschraubt ist.

Die Erfindung betrifft somit auch einen voranstehend beschriebenen Bremszylinder, bei dem der Verstellkolben einen Innensechskant aufweist, um den Verstellkolben zur Verstellung in dem Zylinder zu drehen.

Die Erfindung betrifft somit auch einen voranstehend beschriebenen Bremszylinder, bei dem der Verstellkolben und der Kolben über eine Federanordnung miteinander verbunden sind.

Die Erfindung betrifft somit auch einen voranstehend beschriebenen Bremszylinder, bei dem der Abstand zwischen dem Zufluss für hydraulische Flüssigkeit in den Druckraum und dem Verstellkolben in einer von dem Zufluss am weitesten entfernt liegenden Stellung größer als der maximal mögliche Verstellweg des Verstellkolbens ist.

Die Erfindung betrifft somit auch einen voranstehend beschriebenen Bremszylinder, bei dem der Verstellkolben einen Sicherungsring zur Begrenzung des Verstellwegs aufweist.

Die Erfindung betrifft somit auch einen voranstehend beschriebenen Bremszylinder, bei dem der Verstellkolben mit einer Dichtung gegenüber dem Druckraum und der Kolben mit einer Dichtung gegenüber dem Druckraum abgedichtet sind.

Die Erfindung betrifft somit auch einen voranstehend beschriebenen Bremszylinder, bei dem der Kolben in der Länge verstellbar ausgebildet ist.

Die Erfindung betrifft somit auch einen voranstehend beschriebenen Bremszylinder, bei dem der Kolben ein mit der Verstelleinrichtung drehfest angeordnetes Teil und ein mit dem Zylinder im Wesentlichen drehfest angeordnetes Teil aufweist.

Die Erfindung betrifft somit auch einen voranstehend beschriebenen Bremszylinder, bei dem der Kolben ein Kolbeninnenteil und ein Kolbenaußenteil aufweist, die über ein Gewinde zueinander verdrehbar angeordnet sind, und bei dem die Verstellvorrichtung ein Verstellrad aufweist, das mit dem Kolbeninnenteil drehfest verbunden ist, wobei das Kolbenaußenteil in dem Zylinder gegenüber dem Zylinder im wesentlichen drehfest angeordnet ist.

Die Erfindung betrifft somit auch einen voranstehend beschriebenen Bremszylinder, bei dem das Verstellrad vorzugsweise über einer Presspassung drehfest mit einem Bolzen verbunden ist, wobei der Bolzen einen nicht runden Kopf aufweist, der in eine Öffnung des Kolbeninnenteils, die vorzugsweise einen dem Querschnitt des Kopfs entsprechenden Querschnitt aufweist, derart eingreift, dass eine drehschlüssige Verbindung zwischen dem Verstellrad und dem Kolbeninnenteil hergestellt ist.

Die Erfindung betrifft somit auch einen voranstehend beschriebenen Bremszylinder, bei dem das Kolbenaußenteil einen Befestigungskopf zur Aufnahme eines Bremsbelags aufweist, der im wesentlichen drehfest zu dem Zylinder angeordnet ist, wobei der Befestigungskopf eine Fläche zur Verdrehsicherung des Kolbenaußenteils gegenüber dem Belag aufweist.

Die Erfindung betrifft somit auch einen voranstehend beschriebenen Bremszylinder, bei dem der Bremsbelag in Endbereichen zwischen Fortsätzen des Zylinders angeordnet ist.

Die Erfindung betrifft somit auch einen voranstehend beschriebenen Bremszylinder, bei dem der Kolben entgegen der Kraft einer Feder in dem Zylinder in axialer Richtung verschiebbar angeordnet ist.

Die Erfindung betrifft somit auch einen voranstehend beschriebenen Bremszylinder, bei dem der Kolben einen Hohlraum aufweist, in dem ein Bolzen der in axialer Richtung fest mit der Verstellvorrichtung verbunden ist, aufgenommen ist, wobei die Feder mit ihrem druckraumseitigen Ende am Kolben und mit ihrem anderen Ende an einem Kopf des Bolzens abgestützt ist.

Die Erfindung betrifft somit auch einen voranstehend beschriebenen Bremszylinder, bei dem die axiale Abstützung der Feder am Kolben mittels einer Scheibe erfolgt.

Die Erfindung betrifft somit auch eine hydraulische Felgenbremse mit mindestens einem und vorzugsweise zwei der voranstehend beschriebenen Bremszylinder.

In der vorliegenden Offenbarung werden folgende Bezugszeichen verwendet:
- 1: Rahmenteil (Gabelbein oder Hinterbau des Rahmens)
- 2, 2',2": Anordnungsglied
- 3: Bolzen (schwenkbare Verbindung)
- 4: Bremszylinder
- 41: Verbindungsglied
- 42: Arretierungsglied
- 5: Bremsbelag
- 6: Felge
- 7: Bolzen (lösbare Arretierung)
- 8: Laufrichtung der Felge
- 9: Hydraulikleitung
- 10: Aufnahmeeinrichtung (für einen Bremsbelag)
- 20: Schlauch
- 21: Verbindungsschlauch

- 100: Bremszylinder
- 101: Zylinder
- 1011: erster Abschnitt
- 1012: zweiter Abschnitt
- 102: Abstreifer
- 103: Bremsbelag
- 104: Dichtung
- 105: Dichtung
- 106: Druckraum
- 107: Zufluss
- 108: Kolben
- 109: Verstellkolben
- 110: Innensechskant
- 111: Gewinde
- 112: Sicherungsring (zur Hubraumbegrenzung)
- 113: Feder
- 114: Scheibe
- 115: Bolzen
- 116: Presspassung
- 117: Befestigungskopf
- 119: Bolzenkopf

- 200: Bremszylinder
- 201: Zylinder
- 2013: Fortsatz
- 202: Abstreifer
- 203: Bremsbelag
- 204: Dichtung
- 205: Dichtung
- 206: Druckraum
- 207: Zufluss
- 208: Kolben

- 2081: Kolbeninnenteil
- 2082: Kolbenaußenteil
- 209: Verstellrad
- 210: Sechskant (zur Mitnahme des Kolbens)
- 211: Gewinde
- 213: Feder
- 214: Scheibe
- 215: Bolzen
- 217: Befestigungskopf
- 218: Fläche (zur Verdrehsicherung des Kolbenaußenteils gegenüber dem Belag)
- 220: Verstellvorrichtung

- 300: Befestigungsvorrichtung
- 301: Schnellspannhebel
- 3011: exzentrischer Spannbolzen
- 302: Verbindungsglied
- 303: Bolzen
- 304: Schraube
- 305: Gewindebohrung

## Patentansprüche

1. Bremszylinder (100; 200) für eine hydraulische Bremse mit
einem Zylinder (101; 201), in dem ein Kolben (108; 208) in axialer Richtung des Zylinders (101; 201) verschiebbar angeordnet ist, und
einem Druckraum (106; 206), wobei der Kolben (108; 208) in dem Zylinder (101; 201) durch Veränderung des Volumens des Druckraums (106; 206) verschiebbar ist,
**gekennzeichnet durch** eine Verstellvorrichtung (120; 220), mit der die relative Lage des freien Endes des Kolbens (108; 208) in axialer Richtung bezüglich des Zylinders (101; 201) derart verstellbar ist, dass das Volumen des Druckraums (106; 206) unverändert bleibt.

2. Bremszylinder (100) nach Anspruch 1, **dadurch gekennzeichnet, dass** durch Betätigung der Verstelleinrichtung (120) der Kolben (108) gemeinsam mit dem Druckraum (106) in dem Zylinder (101) in axialer Richtung verschiebbar ist.

3. Bremszylinder (100) nach einem der vorhergehenden Ansprüche, **dadurch gekennzeichnet, dass** die Verstellvorrichtung (120) einen Verstellkolben (109) aufweist, der in dem Zylinder (101) derart verschiebbar angeordnet ist, dass sich der Druckraum (106) zwischen dem Kolben (108) und dem Verstellkolben (109) befindet.

4. Bremszylinder (100) nach einem der vorhergehenden Ansprüche, **dadurch gekennzeichnet, dass** der Zylinder (101) einen Abschnitt (1011) mit einem Innengewinde aufweist, in den der Verstellkolben (109) mit einem Außengewinde (111) eingeschraubt ist.

5. Bremszylinder (100) nach einem der vorhergehenden Ansprüche, **dadurch gekennzeichnet, dass** der Verstellkolben (109) einen Innensechskant (110) aufweist, um den Verstellkolben (109) zur Verstellung in dem Zylinder (101) zu drehen.

6. Bremszylinder (100) nach einem der vorhergehenden Ansprüche, **dadurch gekennzeichnet, dass** der Verstellkolben (109) und der Kolben (108) über eine Federanordnung miteinander verbunden sind und/oder der Abstand zwischen dem Zufluss (107) für hydraulische Flüssigkeit in den Druckraum (106) und dem Verstellkolben (109) in einer von dem Zufluss (107) am weitesten entfernt liegenden Stellung größer als der maximal mögliche Verstellweg des Verstellkolbens (109) ist.

7. Bremszylinder (100) nach einem der vorhergehenden Ansprüche, **dadurch gekennzeichnet, dass** der Verstellkolben (109) einen Sicherungsring (112) zur Begrenzung des Verstellwegs aufweist und/oder der Verstellkolben (109) mit einer Dichtung (105) gegenüber dem Druckraum (106) und der Kolben (108) mit einer Dichtung (104) gegenüber dem Druckraum (106) abgedichtet ist.

8. Bremszylinder (200) nach Anspruch 1, **dadurch gekennzeichnet, dass** der Kolben (208) in der Länge verstellbar ausgebildet ist.

9. Bremszylinder (200) nach Anspruch 1 oder 8, **dadurch gekennzeichnet, dass** der Kolben (208) ein mit der Verstelleinrichtung (220) drehfest angeordnetes Teil und ein mit dem Zylinder (201) im Wesentlichen drehfest angeordnetes Teil aufweist.

10. Bremszylinder (200) nach Anspruch 1, 8 oder 9, **dadurch gekennzeichnet, dass** der Kolben (208) ein Kolbeninnenteil (2081) und ein Kolbenaußenteil (2082) aufweist, die über ein Gewinde (211) zueinander verdrehbar angeordnet sind, und dass die Verstellvorrichtung (220) ein Verstellrad (209) aufweist, das mit dem Kolbeninnenteil (2081) drehfest verbunden ist, wobei das Kolbenaußenteil (2082) in dem Zylinder (201) gegenüber dem Zylinder (201) im wesentlichen drehfest angeordnet ist.

11. Bremszylinder (200) nach Anspruch 10, **dadurch gekennzeichnet, dass** das Verstellrad (209) vorzugsweise über einer Presspassung (216) drehfest mit einem Bolzen (215) verbunden ist, wobei der Bolzen (215) einen nicht runden Kopf (210) aufweist, der in eine Öffnung des Kolbeninnenteils (2081), die vorzugsweise einen dem Querschnitt des Kopfs entsprechenden Querschnitt aufweist, derart eingreift, dass eine drehschlüssige Verbindung zwischen dem Verstellrad (209) und dem Kolbeninnenteil (2081) hergestellt ist, und/oder **dadurch gekennzeichnet, dass** das Kolbenaußenteil (2082) einen Befestigungskopf (217) zur Aufnahme eines Bremsbelags aufweist, der im wesentlichen drehfest zu dem Zylinder (201) angeordnet ist, wobei der Befestigungskopf (217) eine Fläche (218) zur Verdrehsicherung des Kolbenaußenteils (2082) gegenüber dem Belag aufweist, wobei vorzugsweise der Bremsbelag in Endbereichen zwischen Fortsätzen (213) des Zylinders (201) angeordnet ist.

12. Bremszylinder (100; 200) nach einem der vorhergehenden Ansprüche, **dadurch gekennzeichnet, dass** der Kolben (108; 208) entgegen der Kraft einer Feder (113; 213) in dem Zylinder (101; 201) in axialer Richtung verschiebbar angeordnet ist.

13. Bremszylinder (100; 200) nach Anspruch 12, **dadurch gekennzeichnet, dass** der Kolben (108; 208) einen Hohlraum aufweist, in dem ein Bolzen (115; 215), der in axialer Richtung fest mit der Verstellvorrichtung (120; 220) verbunden ist, aufgenommen ist, wobei die Feder (113; 213) mit ihrem druckraumseitigen Ende am Kolben (108; 208) und mit ihrem anderen Ende an einem Kopf (119; 219) des Bolzens (115; 215) abgestützt ist.

14. Bremszylinder (100; 200) nach einem der vorhergehenden Ansprüche, **dadurch gekennzeichnet, dass** die axiale Abstützung der Feder (113; 213) am Kolben (108; 208) mittels einer Scheibe (114; 214) erfolgt.

15. Hydraulische Felgenbremse oder Scheibenbremse mit mindestens einem und vorzugsweise zwei Bremszylindern (100; 200) nach einem der vorhergehenden Ansprüche.

## Claims

1. A brake cylinder (100; 200) for a hydraulic brake, comprising
a cylinder (101; 201) in which a piston (108; 208) is slidably arranged in an axial direction of the cylinder (101; 201), and
a pressure chamber (106; 206), wherein the piston (108; 208) is slidable in the cylinder (101; 201) by changing the volume of the pressure chamber (106; 206),
**characterized by** an adjusting device (120; 220) by means of which the relative position of the free end of the piston (108; 208) can be axially adjusted with respect to the cylinder (101; 201) such that the volume of the pressure chamber (106; 206) remains unchanged.

2. The brake cylinder (100) according to claim 1, **characterized in that** the piston (108) is axially slidable together with the pressure chamber (106) in the cylinder (101) by actuation of the adjusting apparatus (120).

3. The brake cylinder (100) according to any of the preceding claims, **characterized in that** the adjusting device (120) has an adjusting piston (109) which can be slidably arranged in the cylinder (101) such that the pressure chamber (106) is located between the piston (108) and the adjusting piston (109).

4. The brake cylinder (100) according to any of the preceding claims, **characterized in that** the cylinder (101) has a portion (1011) which has an internal thread in which the adjusting piston (109) is screwed by means of an external thread (111).

5. The brake cylinder (100) according to any of the preceding claims, **characterized in that** the adjusting piston (109) has an internal hexagon (110) to turn the adjusting piston (109) for the adjustment in the cylinder (101).

6. The brake cylinder (100) according to any of the preceding claims, **characterized in that** the adjusting piston (109) and the piston (108) are connected to each other via a spring arrangement and/or the distance between the inflow (107) for the hydraulic liquid into the pressure chamber (106) and the adjusting piston (109) is greater than the maximum possible adjustment track of the adjusting piston (109) in a position which has maximum distance from the inflow (107).

7. The brake cylinder (100) according to any of the preceding claims, **characterized in that** the adjusting piston (109) has a circlip (112) for limiting the adjusting track and/or the adjusting piston (109) is sealed against the pressure chamber (106) by means of a gasket (105) and the piston (108) is sealed against the pressure chamber (106) by means of a gasket (104).

8. The brake cylinder (200) according to claim 1, **characterized in that** the piston (208) is designed so as to be longitudinally adjustable.

9. The brake cylinder (200) according to claim 1 or 8, **characterized in that** the piston (208) has a member arranged with the adjusting apparatus (220) for rotation therewith and a member arranged with the cylinder (201) substantially for rotation therewith.

10. The brake cylinder (200) according to claim 1, 8 or 9, **characterized in that** the piston (208) has an inner piston member (2081) and an outer piston member (2082) which are arranged so as to be rotated relative to each other via a thread (211) and that the adjusting device (220) has an adjusting wheel (209) which is connected to the inner piston member (2081) for rotation therewith, wherein the outer piston member (2082) is arranged in the cylinder (201) substantially for rotation with the cylinder (201).

11. The brake cylinder (200) according to claim 10, **characterized in that** the adjusting wheel (209) is connected to a pin (215) for rotation therewith preferably via a press fit (216), wherein the pin (215) has a head (210) which is not round and which meshes with an opening of the inner piston member (2081), said opening preferably having a cross-section corresponding to the cross-section of the head, so as to establish a rotationally engaged connection between the adjusting wheel (209) and the inner piston member (2081), and/or **characterized in that** the outer piston member (2082) has a fastening head (217) for receiving a brake pad, which is arranged with respect to the cylinder (201) substantially for rotation therewith, wherein the fastening head (217) has an area (218) for the anti-rotation protection of the outer piston member (2082) with respect to the pad, and wherein the brake pad is preferably arranged in end regions between projections (213) of the cylinder (201).

12. The brake cylinder (100; 200) according to any of the preceding claims, **characterized in that** the piston (108; 208) is arranged in the cylinder (101; 201) in axially slidable fashion against the force of a spring (113; 213).

13. The brake cylinder (100; 200) according to claim 12, **characterized in that** the piston (108; 208) has a cavity which accommodates a pin (115; 215) that is fixedly connected to the adjusting device (120; 220) in an axial direction, wherein the spring (113; 213) is supported with its pressure chamber-side end on the piston (108; 208) and with its other end on a head (119; 219) of the pin (115; 215).

14. The brake cylinder (100; 200) according to any of the preceding claims, **characterized in that** the spring (113; 213) is axially supported on the piston (108; 208) by means of a disk (114; 214).

15. A hydraulic rim brake or disk brake having at least one and preferably two brake cylinders (100; 200) according to any of the preceding claims.

## Revendications

1. Cylindre de frein (100 ; 200) pour un frein hydraulique, comprenant
un cylindre (101 ; 201) dans lequel est agencé un piston (108 ; 208) en translation en direction axiale du cylindre (101 ; 201), et
une chambre à pression (106 ; 206), le piston (108 ; 208) étant mis en translation dans le cylindre (101 ; 201) par modification du volume de la chambre à pression (106 ; 206),
**caractérisé par** un dispositif de déplacement (120 ; 220), au moyen duquel la position relative de l'extrémité libre de piston (108 ; 208) est déplaçable en direction axiale par rapport au cylindre (101 ; 201) de telle façon que le volume de la chambre à pression (106 ; 206) reste non modifié.

2. Cylindre de frein (100) selon la revendication 1, **caractérisé en ce que**, par actionnement du dispositif de déplacement (120), le piston (108) est mis en translation en direction axiale conjointement avec la chambre à pression (106) dans le cylindre (101).

3. Cylindre de frein (100) selon l'une des revendications précédentes, **caractérisé en ce que** le dispositif de déplacement (120) comprend un piston de déplacement (109) qui est agencé en translation dans le cylindre (101) de telle façon que la chambre à pression (106) se trouve entre le piston (108) et le piston de déplacement (109).

4. Cylindre de frein (100) selon l'une des revendications précédentes, **caractérisé en ce que** le cylindre (101) comprend un tronçon (1011) avec un pas de vis intérieur dans lequel est vissé le piston de déplacement (109) avec un pas de vis extérieur (111).

5. Cylindre de frein (100) selon l'une des revendications précédentes, **caractérisé en ce que** le piston de déplacement (109) comporte une empreinte creuse hexagonale (110) afin de faire tourner le piston de déplacement (109) pour son déplacement dans le cylindre (101).

6. Cylindre de frein (100) selon l'une des revendications précédentes, **caractérisé en ce que** le piston de déplacement (109) et le piston (108) sont reliés l'un à l'autre via un agencement à ressort et/ou **en ce que** la distance entre l'arrivée (107) pour le liquide hydraulique dans la chambre à pression (106) et le piston de déplacement (109) est plus grande, dans une position disposée la plus éloignée de l'arrivée (107), que le trajet de déplacement maximum possible du piston de déplacement (109).

7. Cylindre de frein (100) selon l'une des revendications précédentes, **caractérisé en ce que** le piston de déplacement (109) comporte une bague de blocage (112) pour limiter le trajet de déplacement et/ou le piston de déplacement (109) est étanché avec un joint (105) par rapport à la chambre à pression (106) et le piston (108) est étanché avec un joint (104) par rapport à la chambre à pression (106).

8. Cylindre de frein (200) selon la revendication 1, **caractérisé en ce que** le piston (208) est réalisé déplaçable dans sa longueur.

9. Cylindre de frein (200) selon la revendication 1 ou 8, **caractérisé en ce que** le piston (208) comprend une partie agencée solidairement en rotation avec le dispositif de déplacement (220) et une partie agencée sensiblement solidairement en rotation avec le cylindre (201).

10. Cylindre de frein (200) selon la revendication 1, 8 ou 9, **caractérisé en ce que** le piston (208) comprend une partie intérieure de piston (2081) et une partie extérieure de piston (2082) qui sont agencées avec possibilité de rotation l'une par rapport à l'autre via un pas de vis (211), est **en ce que** le dispositif de déplacement (220) comprend une roue de déplacement (209) qui est reliée solidairement en rotation avec la partie intérieure de piston (2081), la partie extérieure de piston (2082) étant agencée dans le cylindre (201) sensiblement solidairement en rotation par rapport au cylindre (201).

11. Cylindre de frein (200) selon la revendication 10, **caractérisé en ce que** la roue de déplacement (209) est reliée, de préférence via un montage à la presse (216), solidairement avec un goujon (215), le goujon (215) comprenant une tête (210) qui n'est pas ronde et qui s'engage dans une ouverture de la partie intérieure de piston (2081), qui présente de préférence une section correspondant à la section de la tête, de telle manière qu'il s'établit une liaison solidaire en rotation entre la roue de déplacement (209) et la partie intérieure de piston (2081), et/ou **caractérisé en ce que** la partie extérieure de piston (2082) comprend une tête de fixation (217) pour la réception d'une garniture de frein qui est agencée sensiblement solidairement en rotation par rapport au cylindre (201), dans lequel la tête de fixation (217) comporte une surface (218) pour empêcher une rotation de la partie extérieure de piston (2082) par rapport à la garniture, et la garniture de frein est de préférence agencée dans des régions terminales entre des prolongements (213) du cylindre (201).

12. Cylindre de frein (100 ; 200) selon l'une des revendications précédentes, **caractérisé en ce que** le piston (108 ; 208) est agencé avec possibilité de translation en direction axiale dans le cylindre (101, 201) à l'encontre de la force d'un ressort (113 ; 213).

13. Cylindre de frein (100 ; 200) selon la revendication 12, **caractérisé en ce que** le piston (108 ; 208) comporte une cavité dans laquelle est reçu un goujon (115 ; 215) qui est relié en direction axiale solidairement avec le dispositif de déplacement (120 ; 220), le ressort (113 ; 213) étant soutenu par son extrémité côté chambre à pression contre le piston (108 ; 208) et avec son autre extrémité sur une tête (119 ; 219) du goujon (115 ; 215).

14. Cylindre de frein (100 ; 200) selon l'une des revendications précédentes, **caractérisé en ce que** le soutien axial du ressort (113 ; 213) sur le piston (108 ; 208) a lieu au moyen d'un disque (114 ; 214).

15. Frein hydraulique sur jante ou frein hydraulique à disque comprenant au moins un et de préférence deux cylindres de frein (100 ; 200) selon l'une des revendications précédentes.
